# EUROPEAN PATENT APPLICATION

(11) **EP 2 711 829 A1**
(43) Date of publication of application: **26.03.2014**
(21) Application number: 13185353.3
(22) Date of filing: 20.09.2013
(51) Int. Cl.: G06F 3/0488

(54) **Display input device as well as electronic apparatus and image forming apparatus having the display input device**

(30) Priority: 24.09.2012 JP 2012209358
(71) Applicant: Kyocera Document Solutions Inc., Chuo-ku Osaka 540-8585 (JP)
(72) Inventor: Hiroshi, Nakagawa, Chuo-ku, Osaka 540-8585 (JP)
(74) Representative: Becker Kurig Straus

(57) **Abstract**

A display input device has a display unit, a touch panel, a detector that detects a two-point distance, which is a distance between two touch positions at which two points have been touched on the touch panel, and a storage unit. When a display magnification changing manipulation, in which a prescribed one point on the touch panel is touched and another point is touched at the same time or is touched within a predetermined time with the prescribed one point being touched, is performed while the display unit displays an image, the display unit displays the image at a display magnification, which is one of the different display magnifications, corresponding to a two-point distance that was first detected during the display magnification changing manipulation.

## Description

### BACKGROUND

Unless otherwise indicated herein, the description in this section is not prior art to the claims in this application and is not admitted to be prior art by inclusion in this section.

The present disclosure relates to a display input device having a touch panel that detects a plurality of touch positions as well as an electronic apparatus and an image forming apparatus that have the display input device. More particularly, the present disclosure relates to a technology that changes the display magnification of an image.

An image forming apparatus includes a plurality of setting items having a setting that can be changed according to the job to be executed. Accordingly, an ordinary image forming apparatus has a display input device that accepts a command to select, from a plurality of setting items, a setting item to change its setting and also a command to receive the new setting of the selected setting item.

The display input device may have a display unit, with a touch panel, on which soft keys, messages, and the like are displayed. With this type of display input device, soft keys that accept, for example, various types of settings are displayed, and touching of a soft key is detected according to an output from the touch panel.

A display input device may have a preview function, which displays a preview image created from user-specified image data. For example, when the display input device accepts a command to execute the preview function, the display input device displays a preview image at a predetermined display magnification. If a display magnification for preview images is predetermined, a preview image may become too large or too small to appropriately fit on the display screen.

With a conventional display input device, therefore, when a preview image is displayed on the display unit, display magnification change keys (enlarging key and reducing key) are displayed on the display unit together with the preview image. After commanding the display input device to display the preview image on the display unit, the user can manipulate the display magnification change keys displayed on the display unit to change the display of the preview image to a desired magnification.

With this type of conventional display input device, however, each time a display magnification change key is touched once, the display magnification of the preview image is changed in steps of a predetermined value. If the current display magnification greatly differs from the desired display magnification, the user must repeatedly touch the display magnification change keys many times to change the current display to the desired display magnification. Since the user must move the user's finger many times, the maneuverability of the display input device is reduced.

### SUMMARY

A display input device according to an embodiment of the present disclosure has a display unit that displays an image, a touch panel attached to the display unit, the touch panel detecting a plurality of touch positions a user is touching, a detector that detects a two-point distance, which is a distance between two touch positions at which two points have been touched on the touch panel, according to outputs from the touch panel, and a storage unit that prestores display magnification determination information in which each of a plurality of different display magnifications is associated with one of two-point distances with different values. When a display magnification changing manipulation, in which a prescribed one point on the touch panel is touched and a different point is touched at the same time as when the prescribed one point is touched or is touched within a predetermined time with the prescribed one point being touched, is performed while the display unit displays an image, the display unit displays the image at a display magnification, which is one of the plurality of different display magnifications, corresponding to a two-point distance that was first detected during the display magnification changing manipulation.

An image forming apparatus according to an embodiment of the present disclosure has the display input device.

An electronic apparatus according to an embodiment of the present disclosure has the display input device.

These as well as other aspects, advantages, and alternatives will become apparent to those of ordinary skill in the art by reading the following detailed description with reference where appropriate to the accompanying drawings. Further, it should be understood that the description provided in this summary section and elsewhere in this document is intended to illustrate the claimed subject matter by way of example and not by way of limitation.

Additional features and advantages are described herein, and will be apparent from the following Detailed Description and the figures.

### BRIEF DESCRIPTION OF THE DRAWINGS

Fig. 1 schematically illustrates an image forming apparatus having a display input device according an embodiment of the present disclosure.

Fig. 2 illustrates the display input device of the image forming apparatus in Fig. 1.

Fig. 3 is a block diagram illustrating the hardware structure of the image forming apparatus in Fig. 1.

Fig. 4 illustrates an example of a screen (preview screen on which a preview image is placed) displayed on the display input device of the image forming apparatus in Fig. 1.

Fig. 5 illustrates manipulations to change the display magnification of the preview image on the display input device of the image forming apparatus in Fig. 1.

Fig. 6 illustrates a manipulation to change the display magnification of the preview image on the display input device of the image forming apparatus in Fig. 1, from a minimum magnification to an intermediate magnification.

Fig. 7 illustrates a manipulation to change the display magnification of the preview image on the display input device of the image forming apparatus in Fig. 1, from the minimum magnification to a maximum magnification.

Fig. 8 illustrates a manipulation to change the display magnification of the preview image on the display input device of the image forming apparatus in Fig. 1, from the maximum magnification to the intermediate magnification.

Fig. 9 illustrates a manipulation to change the display magnification of the preview image on the display input device of the image forming apparatus in Fig. 1, from the maximum magnification to the minimum magnification.

Fig. 10 illustrates a manipulation to change the display magnification of the preview image on the display input device of the image forming apparatus in Fig. 1, from the intermediate magnification to the minimum magnification.

Fig. 11 illustrates a manipulation to change the display magnification of the preview image on the display input device of the image forming apparatus in Fig. 1, from the intermediate magnification to the maximum magnification.

Fig. 12 illustrates a case in which although a manipulation to change the display magnification has been performed on the display input device of the image forming apparatus in Fig. 1, the display magnification of the preview image remains unchanged.

Fig. 13 illustrates an example of a screen (setting changing screen) displayed on the display input device of the image forming apparatus in Fig. 1.

Fig. 14 is a flowchart illustrating an operation executed when a manipulation to change the display magnification is performed on the display input device of the image forming apparatus in Fig. 1.

Fig. 15 illustrates an example of a screen (preview screen on which the preview image and guide information are placed together) displayed on the display input device of the image forming apparatus in Fig. 1.

### DETAILED DESCRIPTION

An example apparatus is described herein. Other example embodiments or features may further be utilized, and other changes may be made, without departing from the spirit or scope of the subject matter presented herein. In the following detailed description, reference is made to the accompanying drawings, which form a part thereof.

The example embodiments described herein are not meant to be limiting. It will be readily understood that the aspects of the present disclosure, as generally described herein, and illustrated in the drawings, can be arranged, substituted, combined, separated, and designed in a wide variety of different configurations, all of which are explicitly contemplated herein.

An image forming apparatus having a display input device according to an embodiment of the present disclosure will be described using an image forming apparatus (multifunction peripheral) that can execute a plurality of jobs such as a copy job and a transmission (scanning) job.

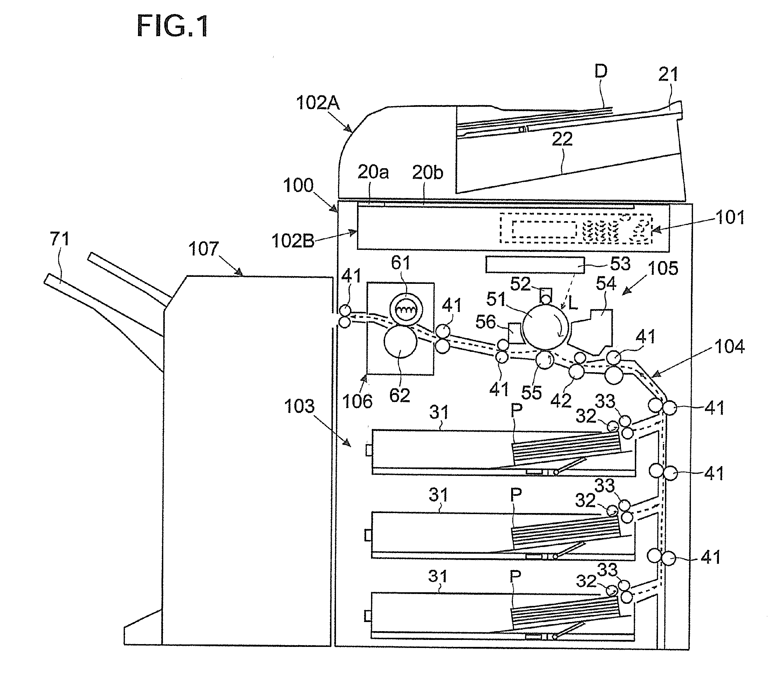

As illustrated in Fig. 1, the image forming apparatus 100 in this embodiment includes a manipulation panel 101, a document conveying unit 102A, an image reading unit 102B, a paper feeding unit 103, a paper conveying unit 104, an image forming unit 105, a fixing unit 106, and a post-processing unit 107. The manipulation panel 101 is equivalent to the display input device in the present disclosure.

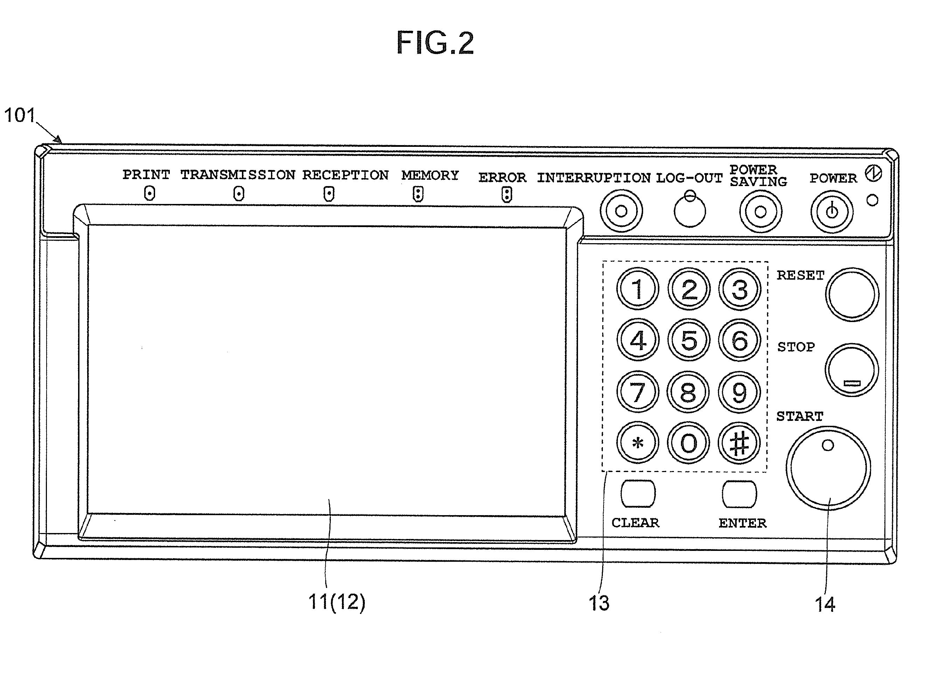

The manipulation panel 101 is placed on, for example, the front of the apparatus. The manipulation panel 101 includes a liquid crystal display unit 12 (equivalent to the display unit in the present disclosure), on the surface of which a touch panel 11 is located, as illustrated in Fig. 2. The touch panel 11 is a multi-touch panel, which can concurrently detect a plurality of touch positions the user has touched. The touch panel 11 accepts not only a one-point touch manipulation, where only one point is touched, but also a two-point touch manipulation, where two points are concurrently touched.

The liquid crystal display unit 12 has soft keys that accept, for example, various types of settings from the user, messages, and the like. When the user touches a soft key on the liquid crystal display unit 12, the soft key touched by the user (that is, the coordinates of the touch position) is detected according to an output from the touch panel 11.

The manipulation panel 101 may include a numeric keypad 13 that accepts numerical inputs, a start key 14 that accepts commands to execute various types of jobs, and other hard keys.

Referring again to Fig. 1, the document conveying unit 102A is attached so as to be openable and closable around a rotational axis (not illustrated) located on a side of the image reading unit 102B, the side facing the rear surface of the apparatus. The document conveying unit 102A draws a document D placed on a document tray 21 and transfers the document D above a conveying and reading contact glass 20a so that the document D is discharged to a document discharge tray 22. The document conveying unit 102A also functions to press the document D placed on a pressing and reading contact glass 20b.

The image reading unit 102B reads the document D and creates image data. Although not illustrated in Fig. 1, the image reading unit 102B includes an exposure lamp, a mirror, a lens, an image sensor, and other optical members. To create image data, the image reading unit 102B illuminates the document D with light while the document D is passing the conveying and reading contact glass 20a, or is placed on the pressing and reading contact glass 20b, and performs A/D conversion on a value output from the image sensor, which has received reflected light from the document D. Thus, the image data obtained by the reading (scanning) of the document D by the image reading unit 102B can be used for printing. The image data obtained by scanning can also be accumulated.

The paper feeding unit 103, which has a plurality of cassettes 31 in which paper P is loaded, feeds the paper P from these cassettes 31 to the paper conveying unit 104. The paper feeding unit 103 includes a pickup roller 32 that picks up the loaded paper P and also has a separation roller pair 33 that prevents more than one paper sheet P from being fed together.

The paper conveying unit 104 feeds the paper P in the interior of the apparatus. Specifically, the paper P fed from the paper feeding unit 103 passes the image forming unit 105 and fixing unit 106, in that order, by being fed by the paper conveying unit 104. The paper conveying unit 104 includes a plurality of conveying roller pairs 41 used to feed the paper P and also has a resist roller pair 42 that makes the paper P wait immediately before it reaches the image forming unit 105, adjusts the timing, and feeds the paper P to the image forming unit 105 at the adjusted timing.

The image forming unit 105 forms a toner image from the image data and transfers the formed toner image to the paper P. The image forming unit 105 includes a photosensitive drum 51, a charging device 52, an exposing device 53, a developing device 54, a transfer roller 55, a cleaning device 56, and the like.

In a toner image forming process and a toner image transfer process, the photosensitive drum 51 is first rotationally driven and the surface of the photosensitive drum 51 is charged at a prescribed electric potential by the charging device 52. The exposing device 53 emits an optical beam L according to the image data to scan the surface of the photosensitive drum 51 so that the surface is exposed. Thus, an electrostatic latent image is formed on the surface of the photosensitive drum 51. The developing device 54 supplies toner to the electrostatic latent image formed on the surface of the photosensitive drum 51 to develop the latent image.

The transfer roller 55 is rotatable while it is brought into pressure contact with the surface of the photosensitive drum 51. A prescribed voltage is applied to the transfer roller 55. In this state, the resist roller pair 42 adjusts the timing and causes the paper P to enter a clearance between the transfer roller 55 and the photosensitive drum 51 at the adjusted timing. Thus, the toner image on the surface of the photosensitive drum 51 is transferred to the paper P. Upon completion of the toner image transfer process, the cleaning device 56 removes toner and other debris left on the surface of the photosensitive drum 51.

The fixing unit 106 heats and pressurizes the toner image transferred to the paper P so that the toner image is fixed on the paper P. The fixing unit 106 includes a fixing roller 61, which incorporates a heat source, and a pressuring roller 62 with which the fixing roller 61 is brought into pressure contact. The paper P, to which the toner image has been transferred, is heated and pressurized while passing through a clearance between the fixing roller 61 and the pressuring roller 62. Thus, the toner image is fixed on the paper P, completing printing.

The post-processing unit 107 receives the printed paper P from the fixing unit 106 and performs sorting, staple, punching, and other post-processing on the printed paper P. The post-processing unit 107 then ejects the printed paper P, on which post-processing has been performed, to an ejection tray 71.

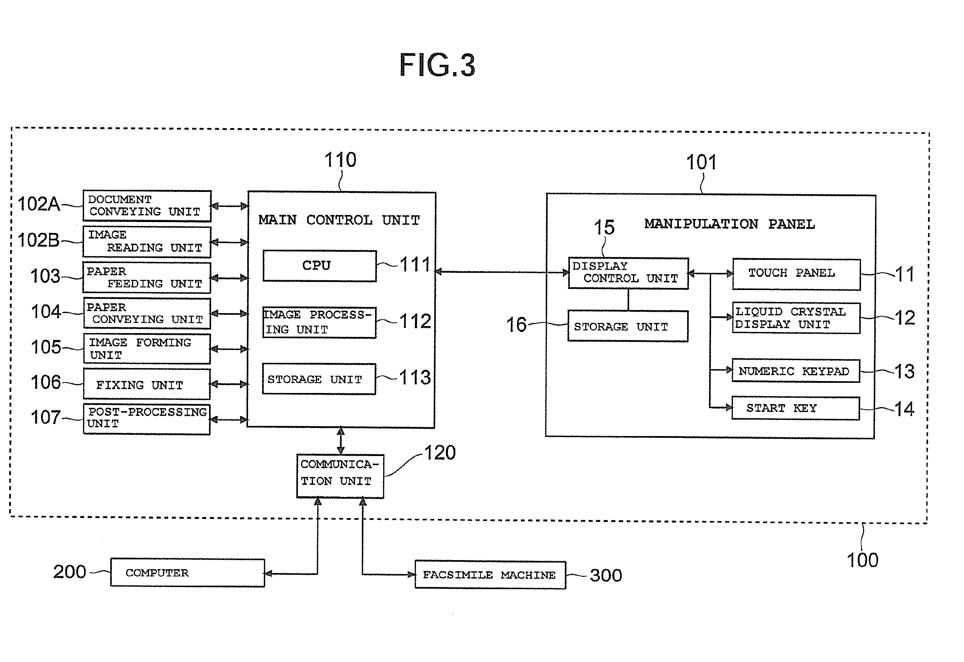

The image forming apparatus 100 has a main control unit 110 as illustrated in Fig. 3. The main control unit 110 includes a central processing unit (CPU) 111, an image processing unit 112, a storage unit 113, and other units.
The image processing unit 112, which includes an application-specific integrated circuit (ASIC) dedicated to image processing, a memory, and other components, performs various types of image processing (such as, for example, enlargement, contraction, density conversion, and data format conversion) on image data. The storage unit 113 includes a read-only memory (ROM), a random-access memory (RAM), a hard disk drive (HDD), and the like. For example, a program and data required to execute a job are stored in the ROM and are then loaded in the RAM.

The document conveying unit 102A, image reading unit 102B, paper feeding unit 103, paper conveying unit 104, image forming unit 105, fixing unit 106, post-processing unit 107, and other units are connected to the main control unit 110. The main control unit 110 performs overall control, image processing control, control for the driving of motors according to the program and data stored in the storage unit 113.

The manipulation panel 101 is also connected to the main control unit 110. The manipulation panel 101 includes a display control unit 15 (equivalent to the detector in the present disclosure) connected to the main control unit 110. The display control unit 15 receives a command from the main control unit 110 and accordingly controls a display operation by the manipulation panel 101. When, for example, the user touches a soft key displayed on the liquid crystal display unit 12, the display control unit 15 detects the touch position (coordinates) according to an output from the touch panel 11. That is, the display control unit 15 detects the soft key that the user has touched. A storage unit 16 is connected to the display control unit 15, so data indicating, for example, correspondence between outputs from the touch panel 11 and touch positions (coordinates) is stored in the storage unit 16.

A communication unit 120 is also connected to the main control unit 110. The communication unit 120 is connected to, for example, an external computer 200 (such as a user terminal or a server) through a network so that communication is possible therebetween. Thus, printing can be performed according to image data transmitted from the computer 200, and image data obtained by scanning can also be transmitted to the computer 200. A modem, for example, may be incorporated in the communication unit 120 so that fax communication with an external facsimile machine 300 becomes possible through a telephone line or another network.

The manipulation panel 101 has a preview function that displays an image according to user-specified image data. The manipulation panel 101 displays, for example, an image based on image data obtained by scanning or an image based on image data transmitted from the computer 200, in response to a user's command. Accordingly, when executing a print job, the user can confirm a print result of the print job before printing the print job.

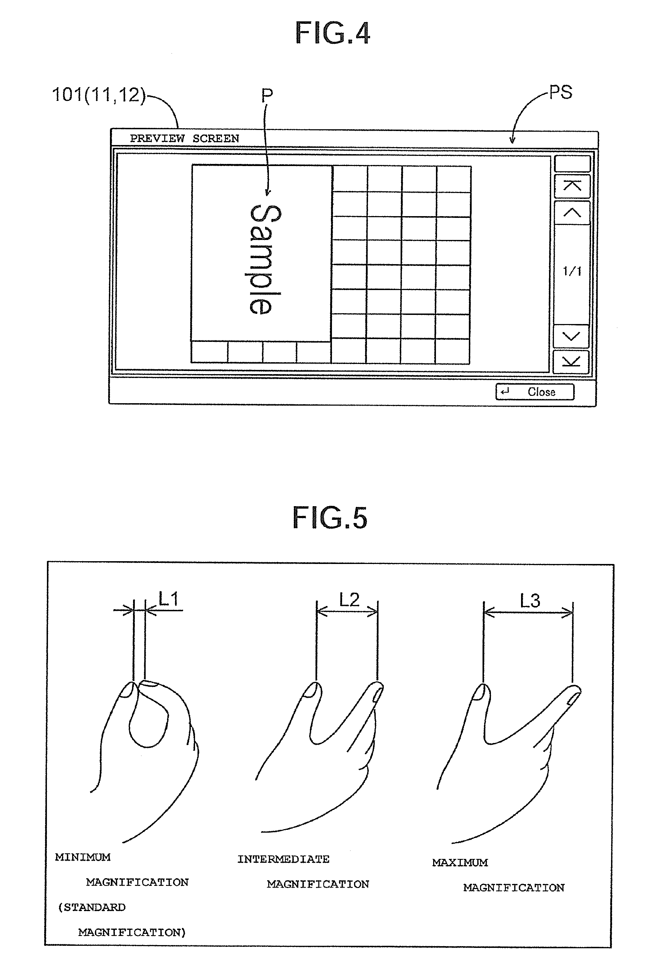

Upon receipt of the user's manipulation to execute the preview function, the display control unit 15 causes the liquid crystal display unit 12 to display a preview screen PS on which a preview image P (image based on the user-specified image data) is placed as illustrated in, for example, Fig. 4. The liquid crystal display unit 12 displays the preview image P at a predetermined display magnification.

Conventionally, a display magnification change key (soft key) has been generally displayed together with the preview image P on the preview image screen PS to accept the command to change the display magnification of the preview image P. In this embodiment, however, the display magnification change key is not displayed on the preview image screen PS. Instead, the display magnification of the preview image P is changed according to the distance between two touch positions that have been touched at the same time on the touch panel 11 (distance between two fingers that touched the touch panel 11). In the descriptions below, the touch manipulation to change the display magnification of the preview image P (manipulation to touch two points on the touch panel 11 at the same time) will be referred to as the display magnification change manipulation and the distance between two touch positions will be referred to as the two-point distance.

Specifically, if a prescribed one point on the touch panel 11 is touched and another point, different from the prescribed one point, is touched at the same time the prescribed one point is touched or is touched within a predetermined time with the prescribed one point being touched, the display control unit 15 decides that the display magnification change manipulation has been performed. When the display magnification change is performed for the touch panel 11, the display control unit 15 calculates the two-point distance detected at that time. The display control unit 15 detects, for example, the touch positions (coordinates) of two points that were first touched according to outputs from the touch panel 11 and calculates the two-point distance from the detection result.

The display control unit 15 then determines a display magnification corresponding to the calculated two-point distance. Specifically, the display control unit 15 references the display magnification determination information prestored in the storage unit 16 and determines the display magnification corresponding to the two-point distance detected during the display magnification change manipulation. The display magnification determination information is, for example, information in which each of a plurality of different display magnifications is associated with one of two-point distances with different values. In an example of the display magnification determination information, each of a plurality of different display magnifications is associated with one of two-point distances with different values so that the larger the two-point distance is, the larger the display magnification.

After determining the display magnification corresponding to the two-point distance detected during the display magnification change manipulation, the display control unit 15 commands the liquid crystal display unit 12 to display the preview image P at the display magnification corresponding to the calculated two-point distance. That is, if a display magnification change manipulation is performed on the touch panel 11 while the liquid crystal display unit 12 displays the preview image P, the liquid crystal display unit 12 displays the preview image P at the display magnification corresponding to the two-point distance that was first detected during the display magnification change manipulation.

The display magnification change manipulation will be described below. In the descriptions below, it is assumed that display magnifications are predetermined at three levels, a minimum magnification (standard magnification), an intermediate magnification larger than the minimum magnification (twice the minimum display magnification) and a maximum magnification larger than the intermediate magnification (four times the minimum display magnification). It is also assumed that, as illustrated in Fig. 5, these display magnifications are set so that the larger the two-point distance (distance between two fingers during the display magnification change manipulation) is, the larger the corresponding display magnification. That is, if two-point distances L1, L2 and L3 have a relationship that L1, L2, and L3 are larger in that order, the two-point distance L1 is associated with the minimum magnification, the two-point distance L2 is associated with the intermediate magnification, and the two-point distance L3 is associated with the maximum magnification.

Upon receipt of a command to execute the preview function from the user, the liquid crystal display unit 12 first displays the preview image P based on the user-specified image data at the minimum magnification (the preview image P is displayed at the minimum size), as illustrated in Fig. 4.

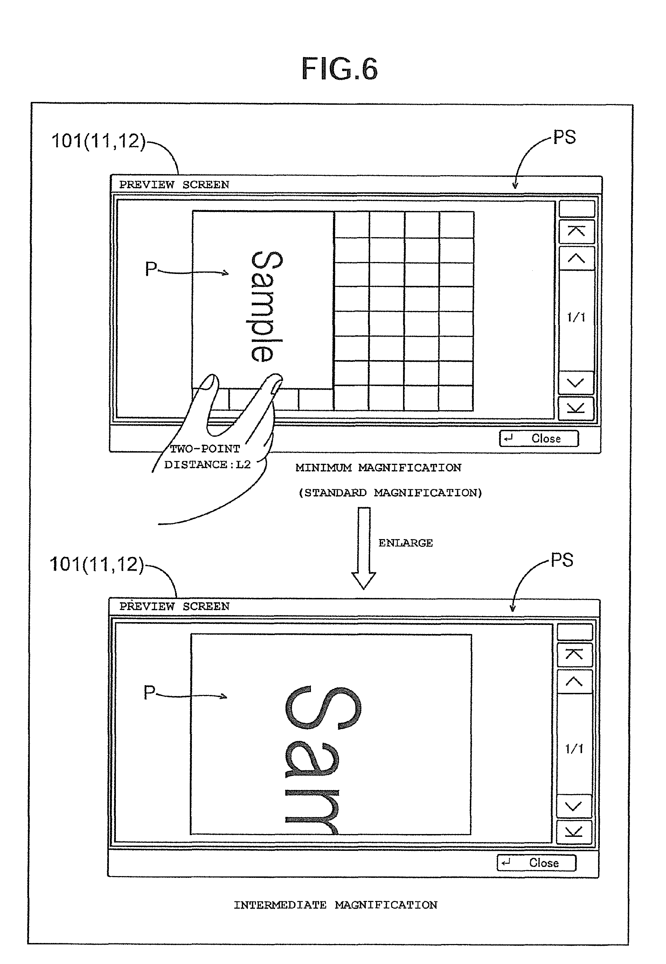

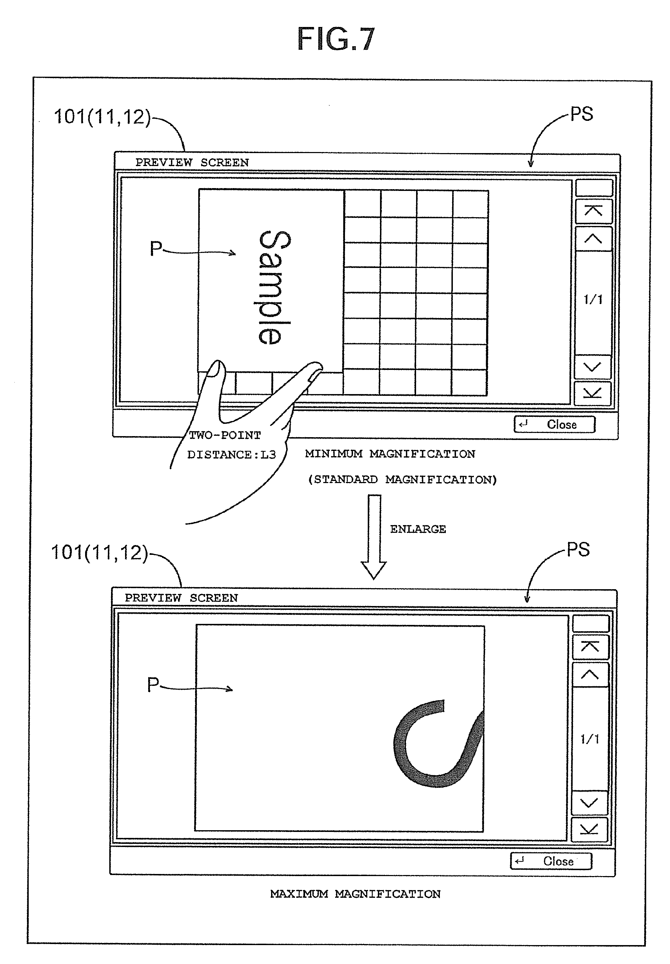

When a display magnification change manipulation is performed on the touch panel 11 while the liquid crystal display unit 12 displays the preview image P at the minimum magnification, if the display magnification corresponding to the two-point distance at that time is larger than the minimum magnification, the liquid crystal display unit 12 makes a display switchover from the current preview image P to a preview image P obtained by enlarging the current preview image P. If, for example, the two-point distance detected during the display magnification change manipulation is the two-point distance L2 corresponding to the intermediate magnification, the liquid crystal display unit 12 displays the preview image P at the intermediate magnification as illustrated in Fig. 6. That is, the display size of the preview image P is increased to twice the current size (minimum size). If the two-point distance detected during the display magnification change manipulation is the two-point distance L3 corresponding to the maximum magnification, the liquid crystal display unit 12 displays the preview image P at the maximum magnification as illustrated in Fig. 7. That is, the display size of the preview image P is increased to four times the current size (minimum size).

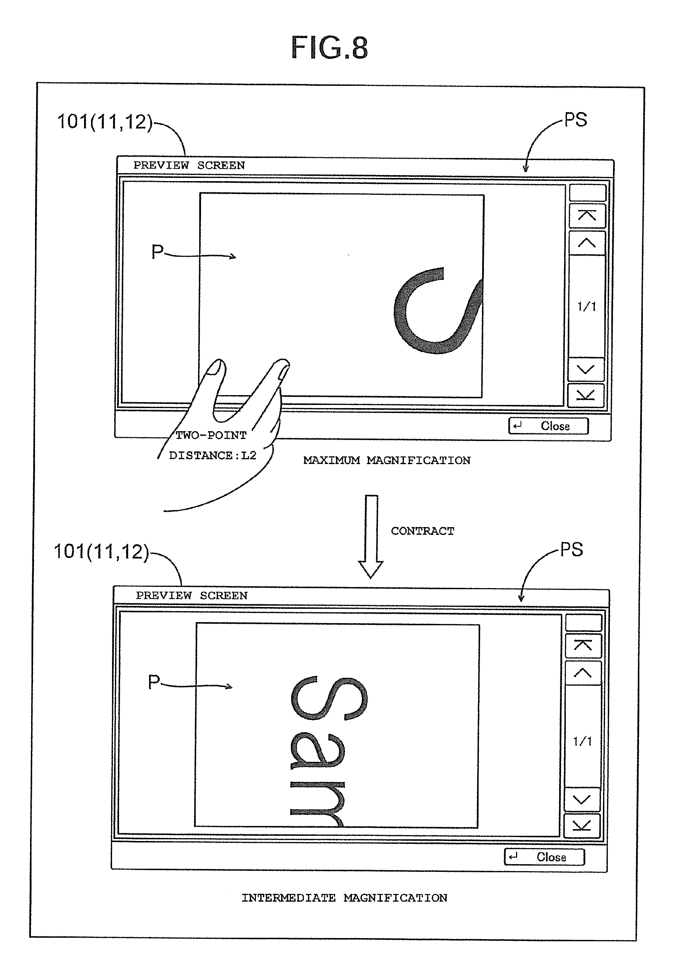

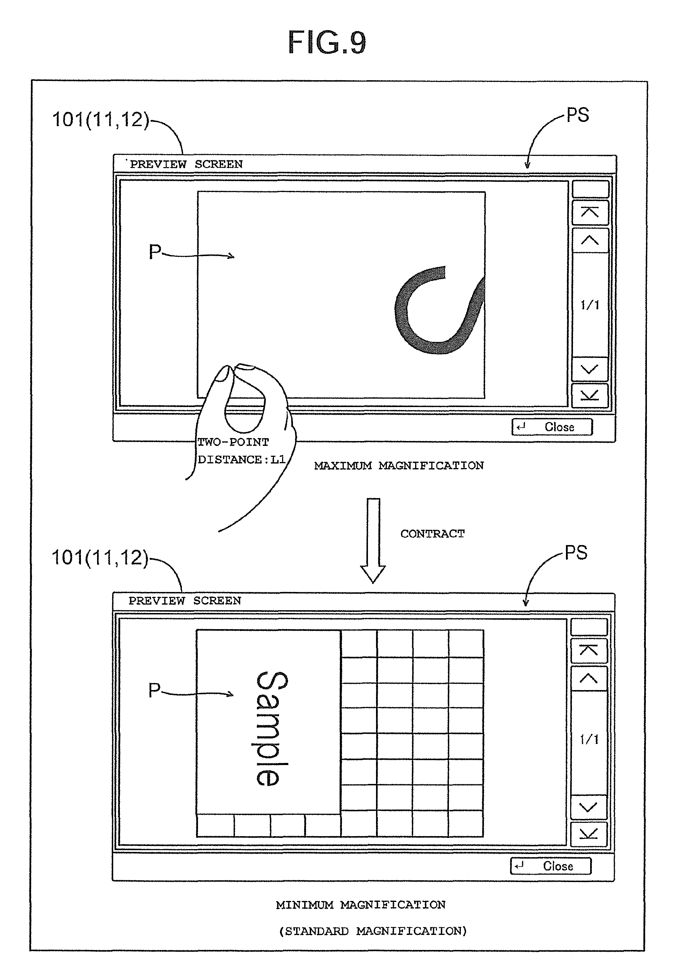

Next, it is assumed that a display magnification change manipulation is performed on the touch panel 11 while the liquid crystal display unit 12 displays the preview image P at the maximum magnification. If the display magnification corresponding to the two-point distance detected during the display magnification change manipulation is smaller than the maximum magnification, the liquid crystal display unit 12 changes the current preview image P to a preview image P obtained by contracting the current preview image P. If, for example, the two-point distance detected during the display magnification change manipulation is the two-point distance L2 corresponding to the intermediate magnification, the liquid crystal display unit 12 displays the preview image P at the intermediate magnification as illustrated in Fig. 8. That is, the display size of the preview image P is reduced to half the current size (maximum size). If the two-point distance detected during the display magnification change manipulation is the two-point distance L1 corresponding to the minimum magnification, the liquid crystal display unit 12 displays the preview image P at the minimum magnification as illustrated in Fig. 9. That is, the display size of the preview image P is reduced to one-fourth the current size (maximum size).

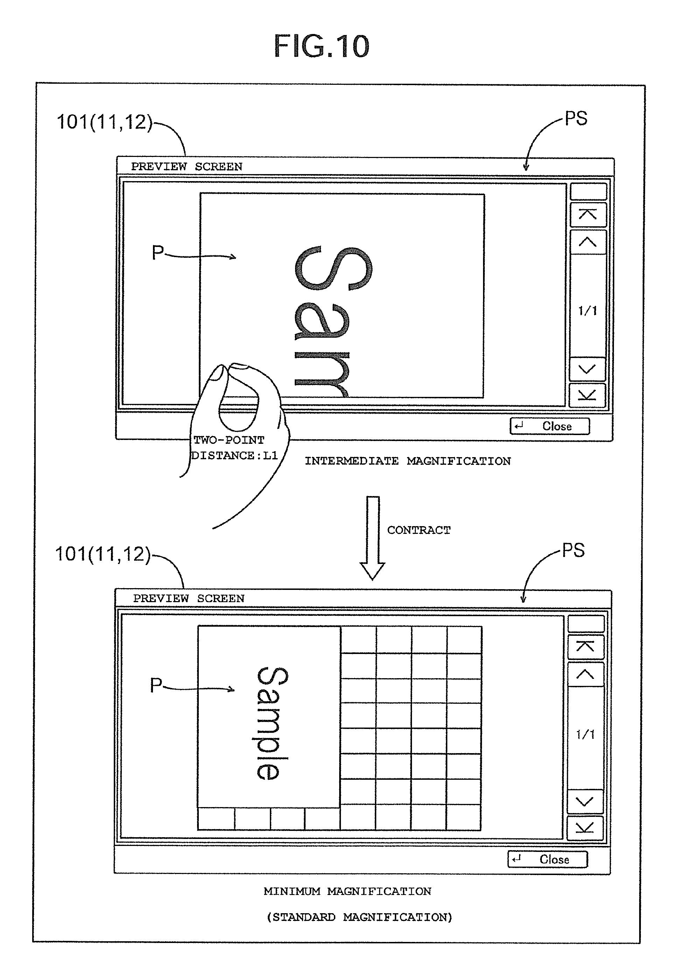

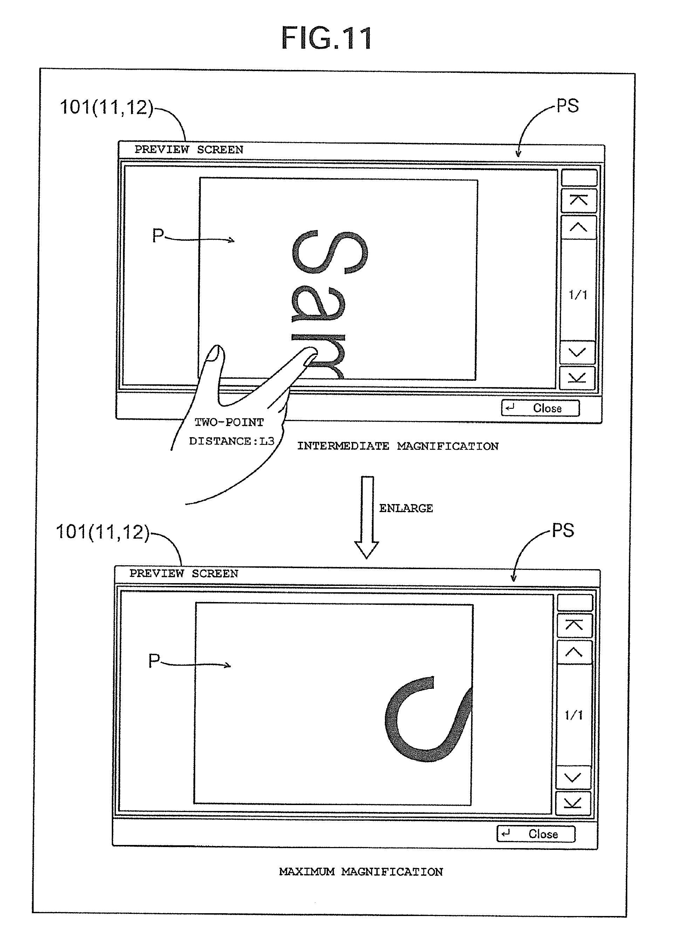

Next, it is assumed that a display magnification change manipulation is performed on the touch panel 11 while the liquid crystal display unit 12 displays the preview image P at the intermediate magnification. If the display magnification corresponding to the two-point distance detected during the display magnification change manipulation is the minimum magnification (magnification corresponding to the two-point distance L1) smaller than the intermediate magnification, the liquid crystal display unit 12 displays the preview image P at the minimum magnification as illustrated in Fig. 10. That is, the display size of the preview image P is reduced to half the current size (intermediate size). If the display magnification corresponding to the two-point distance detected during the display magnification change manipulation is the maximum magnification (magnification corresponding to the two-point distance L3) larger than the intermediate magnification, the liquid crystal display unit 12 displays the preview image P at the maximum magnification as illustrated in Fig. 11. That is, the display size of the preview image P is increased to twice the current size (intermediate size).

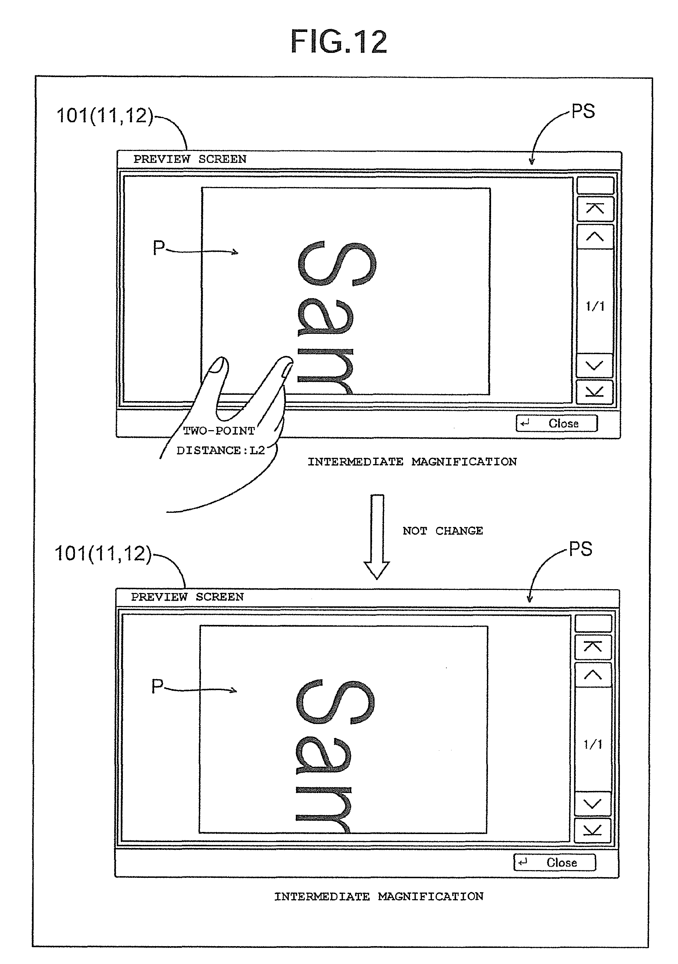

Even if a display magnification change manipulation is performed on the touch panel 11 while the liquid crystal display unit 12 displays the preview image P, if the display magnification corresponding to the two-point distance at that time is the same as the display magnification of the current preview image P, the current display magnification is maintained without the display magnification of the preview image P being changed (the display size of the preview image P is not changed). For example, it is assumed that a display magnification change manipulation is performed on the touch panel 11 while the liquid crystal display unit 12 displays the preview image P at the intermediate magnification, as illustrated in Fig. 12. If the two-point distance detected during the display magnification change manipulation is the two-point distance L2 corresponding to the intermediate magnification, the liquid crystal display unit 12 does not increase the display size of the preview image P, nor does it reduce the display size. Although not illustrated, this is also true when the preview image P is displayed at the minimum magnification or the maximum magnification.

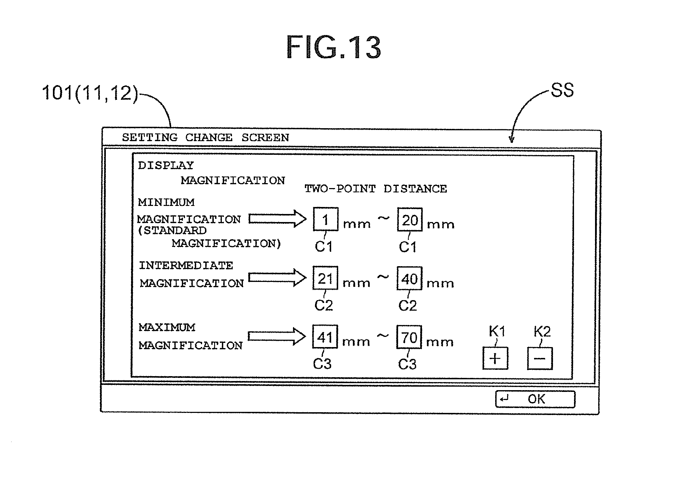

In this embodiment, the manipulation panel 101 accepts, from the user, new values of two-point distance settings associated with the plurality of different display magnifications (minimum magnification, intermediate magnification, and maximum magnification). To allow the manipulation panel 101 to accept the new values from the user, the liquid crystal display unit 12 displays a setting change screen SS as illustrated in, for example, Fig. 13. The touch panel 11 accepts setting change manipulations made on the setting change screen SS displayed by the liquid crystal display unit 12. The storage unit 16 updates the display magnification determination information according to the setting change manipulations accepted by the touch panel 11.

The plurality of different display magnifications are placed on the setting change screen SS and two-point distance input fields C1 to C3 are also displayed thereon for each display magnification. The two-point distance input field C1 corresponds to the minimum magnification, the two-point distance input field C2 corresponds to the intermediate magnification, and the two-point distance input field C3 corresponds to the maximum magnification. Text indicating the current setting is displayed in each of the two-point distance input fields C1 to C3.

When, for example, one of the two-point distance input fields C1 to C3 is touched, the touch panel 11 accepts that the setting in the touched input field is to a setting to be changed. When the plus key K1 or minus key K2 is touched, the touch panel 11 accepts that the setting is to be changed (increased or decreased). The liquid crystal display unit 12 changes the displayed text indicating the setting to be changed each time the plus key K1 or minus key K2 is touched. When the OK key is finally touched, the storage unit 16 rewrites the current setting with the new setting.

The size of the finger depends on the user. Some users may feel that the predetermined two-point distances (distances between fingers) are too narrow to perform the display magnification change manipulation comfortably. If the two-point distances associated with the plurality of different display magnifications can be changed, users' convenience is improved.

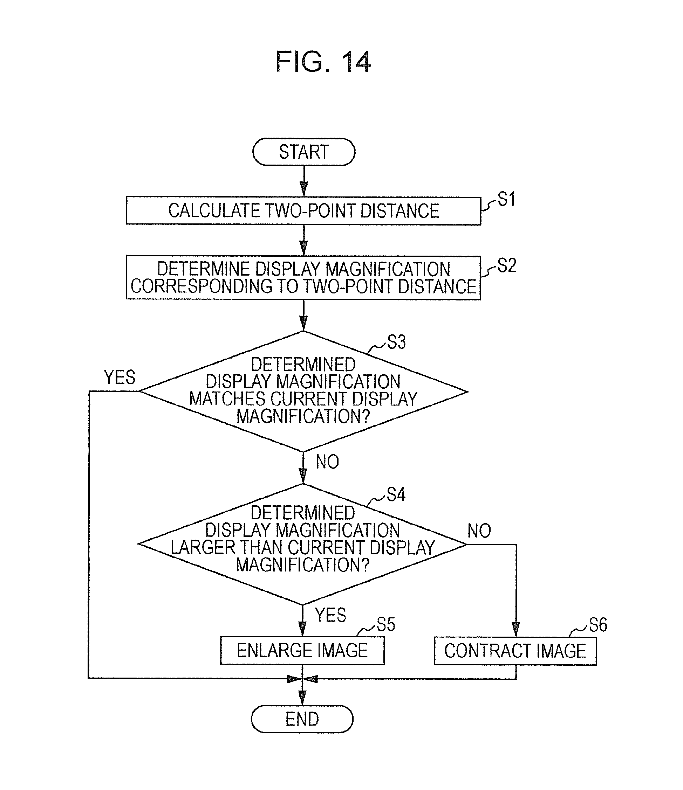

A flow of operation to change the display magnification of the preview image P will be described with reference to Fig. 14.

It is first assumed that the liquid crystal display unit 12 displays the preview image screen PS, on which the preview image P has been placed, at the start of the flowchart in Fig. 14. When a display magnification changing manipulation, in which a prescribed one point on the touch panel 11 is touched and another different point is touched at the same time as the prescribed one point is touched or is touched within a predetermined time with the prescribed one point being touched, is performed while the liquid crystal display unit 12 displays the preview image P, the flowchart in Fig. 14 starts.

In step S1, the display control unit 15 detects the touch positions (coordinates) of two points that were first touched and calculates a two-point distance from the detection result. In step S2, the display control unit 15 references the display magnification determination information prestored in the storage unit 16 and determines the display magnification corresponding to the two-point distance detected during the display magnification change manipulation.

In step S3, the display control unit 15 decides whether the determined display magnification (display magnification corresponding to the two-point distance detected during the display magnification change manipulation) matches the current display magnification. If the resultant decision indicates that the determined display magnification does not match the current display magnification, the sequence proceeds to step S4.

In step S4, the display control unit 15 decides whether the determined display magnification (display magnification corresponding to the two-point distance detected during the display magnification change manipulation) is larger than the current display magnification. If the resultant decision indicates that the determined display magnification (display magnification corresponding to the two-point distance detected during the display magnification change manipulation) is larger than the current display magnification, the sequence proceeds to step S5. If the resultant decision indicates that the determined display magnification (display magnification corresponding to the two-point distance detected during the display magnification change manipulation) is not larger than the current display magnification, that is, smaller than the current display magnification, the sequence proceeds to step S6.

If the sequence proceeds from step S4 to step S5, the display control unit 15 commands the liquid crystal display unit 12 to make a display switchover from the current preview image P to a preview image P obtained by enlarging the current preview image P (the display magnification in this switchover is the determined display magnification). If the sequence proceeds from step S4 to step S6, the display control unit 15 commands the liquid crystal display unit 12 to make a display switchover from the current preview image P to a preview image P obtained by contracting the current preview image P (the display magnification in this switchover is the determined display magnification).

If the determined display magnification (display magnification corresponding to the two-point distance detected during the display magnification change manipulation) matches the current display magnification in step S3, the sequence is terminated without switching the current preview image P to a preview image P obtained by enlarging or contracting the current preview image P.

As described above, the manipulation panel 101 (display input device) in this embodiment has the liquid crystal display unit 12 (display unit) that displays a preview image P (image), the touch panel 11 attached to the liquid crystal display unit 12, the touch panel 11 detecting a plurality of touch positions a user is touching, the display control unit 15 (detector) that detects a two-point distance, which is a distance between two touch positions at which two points have been touched, according to outputs from the touch panel 11, and the storage unit 16 that prestores display magnification determination information in which each of a plurality of different display magnifications is associated with one of two-point distances with different values. When a display magnification changing manipulation, in which a prescribed one point on the touch panel 11 is touched and another different point is touched at the same time or is touched within a predetermined time with the prescribed one point being touched, is performed while the liquid crystal display unit 12 displays the preview image P, the liquid crystal display unit 12 displays the preview image P at a display magnification, which is one of the plurality of different display magnifications, corresponding to a two-point distance that was first detected during the display magnification changing manipulation.

In this structure, to change the current display magnification to a desired display magnification (to switch the current preview image P to a preview image P obtained by enlarging or contracting the current preview image P), it suffices only to perform a manipulation in which a prescribed one point on the touch panel 11 is touched and another different point is touched at the same time or is touched within a predetermined time with the prescribed one point being touched, that is, a two-point touch manipulation, so that the distance between two touch positions becomes a two-point distance associated with the desired display magnification. That is, there is no need to repeatedly touch the touch panel 11 until the current display magnification is changed to the desired display magnification or perform any gesture after having touched the touch panel 11 (that is, there is no need to slide a touch position, pinch in or pinch out to change a distance between two touch positions, or perform another manipulation). Accordingly, it is possible to reduce finger motions of the user in a manipulation to change the display magnification of the preview image P, improving users' convenience.

In addition, hard keys do not need to be provided to accept a manipulation to change the display magnification of the preview image P, enabling costs to be lowered. Soft keys do not also need to be displayed on the screen to accept a manipulation to change the display magnification of the preview image P, enabling the space on the screen to be efficiently used. For example, a large space can be taken to display the preview image P the display magnification of which is to be changed.

In this embodiment, as described above, if the display magnification corresponding to the two-point distance that was first detected during the display magnification change manipulation is larger than the current display magnification, the liquid crystal display unit 12 makes a display switchover from the current preview image P to a preview image P obtained by enlarging the current preview image P; if the display magnification corresponding to the two-point distance that was first detected during the display magnification change manipulation is smaller than the current display magnification, the liquid crystal display unit 12 makes a display switchover from the current preview image P to a preview image P obtained by contracting the current preview image P. That is, to switch from the current preview image P to a preview image P obtained by enlarging the current preview image P, it suffices to make the distance between two fingers that touch two points (a prescribed one point and another point different from the prescribed one point) on the touch panel 11 longer than the two-point distance associated with the current display magnification; to switch from the current preview image P to a preview image P obtained by contracting the current preview image P, it suffices to make the distance between two fingers that touches two points on the touch panel 11 shorter than the two-point distance associated with the current display magnification. Accordingly, a manipulation to switch from the current preview image P to a preview image P obtained by enlarging or contracting the current preview image P is intuitive and is thereby easy-to-understand.

In an embodiment, as described above, if the display magnification corresponding to the two-point distance that was first detected during the display magnification change manipulation is the same as the current display magnification, the liquid crystal display unit 12 does not switch the current preview image P to a preview image P obtained by enlarging or contracting the current preview image P (leaves the current display magnification unchanged). That is, even if a display magnification change manipulation is performed to obtain a two-point distance corresponding to a desired display magnification, if the current display magnification is already the desired display magnification, the current preview image P is not switched to a preview image P obtained by enlarging or contracting the current preview image P. Accordingly, it is possible to prevent the preview image P from being displayed at a display magnification different from the desired display magnification.

It should be understood that the currently disclosed embodiment is exemplary in all points and is not restrictive. The scope of the present disclosure is not indicated by the descriptions of the above embodiment, but is indicated by the scope of the attended claims. The scope of the present disclosure also includes meanings equivalent to the scope of the attended claims and all modifications within the scope of the attended claims.

Although, for example, display magnifications at three levels have been used in the above embodiment, the present disclosure is not limited to this; display magnifications at two levels or four levels or more may be used.

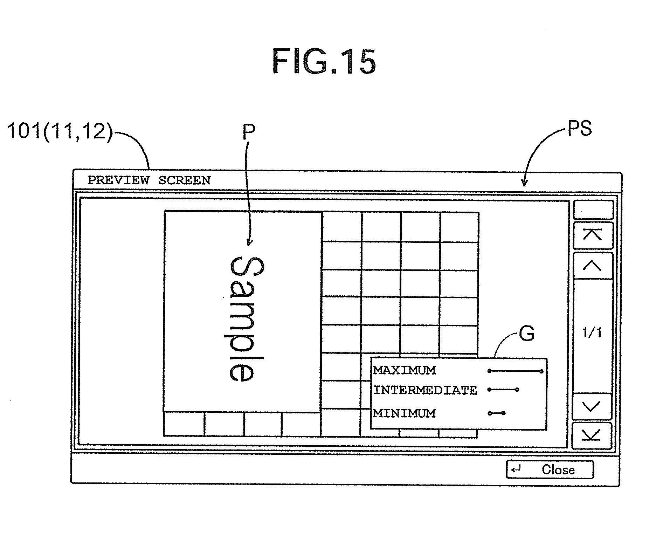

In the structure in the above embodiment, guide information G may also be displayed on the preview image PS on which the preview image P has been placed, as illustrated in Fig. 15; the guide information G indicates the lengths of two-point distances associated with the display magnifications at three levels (minimum magnification, intermediate magnification, and maximum magnification) so that the lengths can be visually identified. Thus, the user can easily grasp a distance between two points to be touched during a display magnification change manipulation, improving the user's convenience. In the guide information G illustrated in Fig. 15, the length of a two-point distance associated with each display magnification is indicated by a segment length.

Although the structure in the above embodiment has been described for an image forming apparatus, the structure can also be applied to electronic apparatuses including the display input device in the present disclosure such as, for example, mobile information terminals, personal computers, and car navigation devices.

It should be understood that various changes and modifications to the presently preferred embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A display input device comprising:
a display unit(12) that displays an image;
a touch panel(11) attached to the display unit(12), the touch panel(11) detecting a plurality of touch positions at which a user is touching;
a detector(15) that detects a two-point distance, which is a distance between two touch positions at which two points have been touched on the touch panel(11), according to an output from the touch panel(11); and
a storage unit(16) that prestores display magnification determination information in which each of a plurality of different display magnifications is associated with one of two-point distances with different values; wherein
when a display magnification changing manipulation, in which a prescribed one point on the touch panel is touched and another different point is touched at the same time or is touched within a predetermined time with the prescribed one point being touched, is performed while the display unit(12) displays an image, the display unit(12) displays the image at a display magnification, which is one of the plurality of different display magnifications, corresponding to a two-point distance that was first detected during the display magnification changing manipulation.

2. The display input device according to Claim 1, wherein:
if the display magnification corresponding to the two-point distance that was first detected during the display magnification change manipulation is larger than a current display magnification, the display unit(12) makes a display switchover from a current image to an image obtained by enlarging the current image; and
if the display magnification corresponding to the two-point distance that was first detected during the display magnification change manipulation is smaller than the current display magnification, the display unit(12) makes a display switchover from the current image to an image obtained by contracting the current image.

3. The display input device according to Claim 2, wherein if the display magnification corresponding to the two-point distance that was first detected during the display magnification change manipulation is the same as the current display magnification, the display unit(12) does not switch the current image to the image obtained by enlarging or contracting the current image.

4. The display input device according to any one of Claims 1 to 3, wherein:
the display unit(12) displays a setting changing screen(ss) used to accept a new setting of a two-point distance associated with one of the plurality of different display magnifications;
the touch panel(11) accepts a setting changing manipulation performed on the setting changing screen(ss) displayed by the display unit(12); and
the storage unit(16) updates the display magnification determination information according to the setting changing manipulation accepted by the touch panel(11).

5. An image forming apparatus comprising a display input device(101) having a preview function that displays an image according to user-specified image data, wherein:
the display input device(101) has
a display unit(12) that displays an image,
a touch panel(11) attached to the display unit(12), the touch panel(11) detecting a plurality of touch positions a user is touching,
a detector(15) that detects a two-point distance, which is a distance between two touch positions at which two points have been touched on the touch panel(11), according to an output from the touch panel(11), and
a storage unit(16) that prestores display magnification determination information in which each of a plurality of different display magnifications is associated with one of two-point distances with different values; and
when a display magnification changing manipulation, in which a prescribed one point on the touch panel is touched and another different point is touched at the same time or is touched within a predetermined time with the prescribed one point being touched, is performed while the display unit(12) displays an image, the display unit(12) displays the image at a display magnification, which is one of the plurality of different display magnifications, corresponding to a two-point distance that was first detected during the display magnification changing manipulation.

6. The image forming apparatus according to Claim 5, wherein:
if the display magnification corresponding to the two-point distance that was first detected during the display magnification change manipulation is larger than a current display magnification, the display unit(12) makes a display switchover from a current image to an image obtained by enlarging the current image; and
if the display magnification corresponding to the two-point distance that was first detected during the display magnification change manipulation is smaller than the current display magnification, the display unit(12) makes a display switchover from the current image to an image obtained by contracting the current image.

7. The image forming apparatus according to Claim 6, wherein if the display magnification corresponding to the two-point distance that was first detected during the display magnification change manipulation is the same as the current display magnification, the display unit(12) does not switch the current image to the image obtained by enlarging or contracting the current image.

8. The image forming apparatus according to any one of Claims 5 to 7, wherein:
the display unit(12) displays a setting changing screen(ss) used to accept a new setting of a two-point distance associated with one of the plurality of different display magnifications;
the touch panel(11) accepts a setting changing manipulation performed on the setting changing screen displayed by the display unit(12); and
the storage unit(16) updates the display magnification determination information according to the setting changing manipulation accepted by the touch panel(11).

9. An electronic apparatus comprising a display input device(101) having a preview function that displays an image according to user-specified image data, wherein:
the display input device(101) has
a display unit(12) that displays an image,
a touch panel(11) attached to the display unit(12), the touch panel(11) detecting a plurality of touch positions a user is touching,
a detector(15) that detects a two-point distance, which is a distance between two touch positions at which two points have been touched on the touch panel(11), according to an output from the touch panel(11), and
a storage unit(16) that prestores display magnification determination information in which each of a plurality of different display magnifications is associated with one of two-point distances with different values; and
when a display magnification changing manipulation, in which a prescribed one point on the touch panel is touched and another different point is touched at the same time or is touched within a predetermined time with the prescribed one point being touched, is performed while the display unit(12) displays an image, the display unit(12) displays the image at a display magnification, which is one of the plurality of different display magnifications, corresponding to a two-point distance that was first detected during the display magnification changing manipulation.

10. The electronic apparatus according to Claim 9, wherein:
if the display magnification corresponding to the two-point distance that was first detected during the display magnification change manipulation is larger than a current display magnification, the display unit(12) makes a display switchover from a current image to an image obtained by enlarging the current image; and
if the display magnification corresponding to the two-point distance that was first detected during the display magnification change manipulation is smaller than the current display magnification, the display unit(12) makes a display switchover from the current image to an image obtained by contracting the current image.

11. The electronic apparatus according to Claim 10, wherein if the display magnification corresponding to the two-point distance that was first detected during the display magnification change manipulation is the same as the current display magnification, the display unit(12) does not switch the current image to the image obtained by enlarging or contracting the current image.

12. The electronic apparatus according to any one of Claims 9 to 11, wherein:
the display unit(12) displays a setting changing screen(ss) used to accept a new setting of a two-point distance associated with one of the plurality of different display magnifications;
the touch panel(11) accepts a setting changing manipulation performed on the setting changing screen(ss) displayed by the display unit(12); and
the storage unit(16) updates the display magnification determination information according to the setting changing manipulation accepted by the touch panel(11).
